# EUROPÄISCHE PATENTSCHRIFT

(11) **EP 0 732 347 B1**
(45) Veröffentlichungstag und Bekanntmachung des Hinweises auf die Patenterteilung: **23.05.2001**
(21) Anmeldenummer: 96104163.9
(22) Anmeldetag: 15.03.1996
(51) Int. Cl.: C08G 12/40, C04B 24/22

(54) **Wasserlösliche Polykondensationsprodukte auf Basis von Amino-s-triazinen und deren Verwendung**
Water-soluble polycondensation products based on amino-s-triazines and their use
Produits de polycondensation hydrosolubles à base d'amino-s-triazines et leur utilisation

(30) Priorität: 17.03.1995 DE 19509759
(43) Veröffentlichungstag der Anmeldung: 18.09.1996
(73) Patentinhaber: SKW Trostberg Aktiengesellschaft, 83308 Trostberg (DE)
(72) Erfinder: Albrecht, Gerhard, Dr., 83308 Trostberg (DE); Weichmann, Josef, Dr., 84568 Pleiskirchen (DE); Eibl, Ludwig, 83376 Truchtlaching (DE); Huber, Christian, 84518 Garching (DE); Kern, Alfred, Dr., 84558 Kirchweidach (DE)
(74) Vertreter: Huber, Bernhard, Dipl.-Chem.

(56) Entgegenhaltungen:
- EP-A- 0 206 723
- CHEMICAL ABSTRACTS, vol. 95, no. 2, 13.Juli 1981 Columbus, Ohio, US; abstract no. 11611n, CHERKINSKINSKII,YU ET ALL.: "Plasiticizer for a concrete mix" Seite 11596; XP002009765 & SU-A-783 264 (SCIENTIFIC RESEARCH LABORATORY) 30.November 1980

## Beschreibung

Die Erfindung betrifft wasserlösliche Polykondensationsprodukte auf Basis von Amino-s-triazinen mit wenigstens zwei Aminogruppen und Formaldehyd sowie deren Verwendung als Zusatzmittel für wäßrige Bindemittelsuspensionen.

Im Betonbau sowie in den Bereichen Bautenschutz und Bausanierung spielt die Verarbeitung von hydraulischen Bindemitteln, wie z. B. Portlandzement, Hochofenzement, Traß- und Flugaschenzement sowie Anhydrit und Gips u.a., in hochkonzentrierten wäßrigen Suspensionen mit anorganischen Bestandteilen wie Sand, Kies, Schotter und Gesteinsmehl eine wesentliche Rolle.

Aus der DE-PS 16 71 017 ist es bekannt, zementhaltige Baustoffmischungen unter Zusatz von wasserlöslichen sulfonsäuregruppenhaltigen Melamin-Formaldehyd-Polykondensationsprodukten herzustellen, um deren Verarbeitbarkeit, insbesondere deren Fließfähigkeit, bei einem vorgegebenen Wasser/Zement-Verhältnis zu erhöhen bzw. die mechanischen Eigenschaften des erhärtenden Baustoffs durch Reduzierung der eingesetzten Wassermenge zu verbessern. Zusatzmittel auf Basis von Naphthalinsulfonsäure-Formaldehyd-Polykondensationsprodukten sind bspsw. in der EP-A 214 412 beschrieben.

Ein gemeinsamer Nachteil dieser als Superverflüssiger bzw. wasserreduzierende Mittel bezeichneten Additive ist der Abfall der Fließfähigkeit entsprechend hergestellter Baustoffmischungen in einer relativ kurzen Zeitspanne. Der Bedarf an Verarbeitungshilfsmitteln für Baustoffe, die bei Beibehaltung der positiven Eigenschaften herkömmlicher Fließmittel, wie hohe Frühfestigkeit und geringe Lufteinführung, das Problem der kurzen Aufrechterhaltung der Fließfähigkeit lösen können, ist dementsprechend groß.

EP 0 206 723 offenbart sulfomethylierte Melaminpolymere, die durch Umsetzung von Melamin mit Formaldehyd, Alkalimetall-oder Ammoniumsalzen der schwefligen Säure und einem Polyoxyalkylen hergestellt werden. Diese Produkte sind laut EP 0 206 723 wasserquellbar und gelbildend und werden als geeignet für die Gewinnung von Kohlenwasserstoffen aus unterirdischen Lagerstätten bezeichnet. Hinweise auf wasserlösliche und die Fließfähigkeit verlängernde Produkte sind nicht angegeben.

Der vorliegenden Erfindung liegt daher die Aufgabe zugrunde, neue Zusatzmittel für wäßrige Bindemittelsuspensionen bereitzustellen, welche die genannten Nachteile des Standes der Technik nicht aufweisen, sondern die Fließfähigkeit der entsprechend hergestellten Baustoffmischungen über einen ausreichend langen Zeitraum praxisgerecht aufrechterhalten können, ohne den Abbinde- und Erhärtungsprozeß zu verzögern und bedingt durch einen geringen Grad der Lufteinführung keine Nachteile bei den mechanischen Eigenschaften des erhärteten Baustoffs bewirken.

Diese Aufgabe wird erfindungsgemäß gelöst durch wasserlösliche Polykondensationsprodukte auf Basis von Amino-s-triazinen mit wenigstens zwei Aminogruppen, Formaldehyd und Sulfit im Molverhältnis 1 : 0,5 bis 5,0 : 0,1 bis 1,5, die dadurch hergestellt werden, daß man Amino-s-triazin, Formaldehyd und Sulfit in wäßriger Lösung bei einem pH-Wert von 9,0 bis 12,0 und einer Temperatur von 40 bis 90°C so lange kondensiert, bis das Sulfit nicht mehr nachweisbar ist und gegen Ende der Vorkondensation pro Mol eingesetztes Amino-s-triazin 0,01 bis 1,0 Mol eines Polyoxyalkylen-Derivats der allgemeinen Formel (I) zugibt 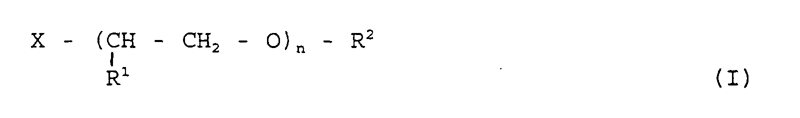 worin
- X =: -NH₂, -NH-C0-NH₂, -0-C0-NH₂ oder -O-CO-NH-R³-NH-CO-Z
- R¹ =: H oder einen aliphatischen Kohlenwasserstoffrest mit 1 bis 4 C-Atomen
- R² =: H oder einen aliphatischen Kohlenwasserstoffrest mit 1 bis 20 C-Atomen, einen cycloaliphatischen Rest mit 5 bis 8 C-Atomen oder einen ggf. substituierten aromatischen Kohlenwasserstoffrest mit 6 bis 10 C-Atomen oder 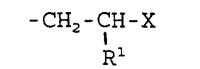
worin
- R³: = einen aliphatischen Kohlenwasserstoffrest mit 2 bis 18 C-Atomen, einen cycloaliphatischen Kohlenwasserstoffrest mit 4 bis 15 C-Atomen, einen aromatischen Kohlenwasserstoffrest mit 6 bis 15 C-Atomen oder einen araliphatischen Kohlenwasserstoffrest mit 8 bis 15 C-Atomen
- Z =: -NH₂, -NH-CO-NH₂ und
- n =: eine Zahl 1 bis 100
bedeuten
oder/und
a₂) ein Aldehydsäure-Derivat der allgemeinen Formel (II)

   H - C0 - R⁴ (II)

   worin R⁴ = COOH oder einen Phenylrest mit -COOH,
   -S0₃H oder -P0₃H₂ bzw. deren ein- oder zweiwertige Salze bedeuten,
   zuerst mit dem Amino-s-triazin in einer Menge von 0,01 bis 1,5 Mol pro Mol Amino-s-triazin bei einem pH-Wert von 4,5 bis 6,5 und einer Temperatur von 20 bis 90°C und anschließend mit Formaldehyd in einer Menge von 0,5 bis 5,0 Mol pro Mol Amino-s-triazin ggf. unter Zugabe von Sulfit und/oder einem Polyoxyalkylen-Derivat bei einem pH-Wert von 9,0 bis 12,0 und einer Temperatur von 40 bis 90°C reagieren läßt und
b) im Anschluß an die Stufe a₁) oder a₂) bei einem pH-Wert von 3,0 bis 7,0 und einer Temperatur von 40 bis 90°C so lange weiterkondensiert, bis die Viskosität der Lösung bei 20°C und einem Feststoffgehalt von 20 Gew.-% einen Wert von 2-10 x 10⁻⁶ m²/s (2 bis 10 cSt) aufweist. In dieser Anmeldung entspricht 1 cSt 10⁻⁶ m²/s.

Es hat sich nämlich überraschenderweise gezeigt, daß die erfindungsgemäßen Polykondensationsprodukte eine mindestens genauso gute verflüssigende Wirkung besitzen wie die sulfonierten Melamin-Formaldehyd-Harze entsprechend dem Stand der Technik, wobei die Fließfähigkeit entsprechend hergestellter Baustoffmischungen mit Hilfe der erfindungsgemäßen Polykondensationsprodukte über einen längeren Zeitraum aufrechterhalten werden kann. Außerdem wurden trotz des verzögerten Ansteifens der Baustoffmischung keine negativen Auswirkungen auf den Abbinde- und Erhärtungsprozeß beobachtet und keine Einbußen bei den mechanischen Eigenschaften des hydratisierten Baukörpers bedingt durch eingeführte Makroluftporen festgestellt.

Ein weiterer Gegenstand der Erfindung ist das Verfahren zur Herstellung der erfindungsgemäßen Polykondensationsprodukte. Dieses Herstellverfahren wird in zwei Kondensationsstufen a) und b) durchgeführt. Die erste Kondensationsstufe a), nämlich die Vorkondensation, kann hierbei auf zwei verschiedenen Wegen erfolgen.

Entsprechend einer ersten alternativen Ausführungsform (Kondensationsstufe al) werden Amino-s-triazin, Formaldehyd und Sulfit im Molverhältnis 1 : 0,5 bis 5,0 : 0,1 bis 1,5 in wäßriger Lösung bei einem pH-Wert von 9,0 bis 12,0 und einer Temperatur von 40 bis 90°C so lange kondensiert, bis das Sulfit nicht mehr nachweisbar ist. Als Amino-s-triazin mit mindestens zwei NH₂-Gruppen wird bevorzugt Melamin eingesetzt. Die Verwendung monosubstituierter Amino-s-triazine, wie etwa Benzo- oder Acetoguanamin, ist ebenfalls möglich. Generell können im Rahmen der vorliegenden Erfindung bis zu 50 Mol-% des Amino-s-triazins durch andere Aminoplastbildner ersetzt werden, wobei z. B. Harnstoff, Thioharnstoff, Dicyandiamid oder Guanidin(-Salze) geeignet sind.

Als Aldehyd wird Formaldehyd zweckmäßig in Form einer 30 %igen oder auch höherprozentigen wäßrigen Formalinlösung oder als Paraformaldehyd verwendet.

Zur Modifizierung der erfindungsgemäßen Polykondensationsprodukte in wasserlösliche bzw. wasserverträgliche Form setzt man die üblichen Sulfitderivate wie etwa Alkali- und Erdalkalisulfite sowie deren Hydrogen- bzw. Pyrosulfite bevorzugt ein.

Es ist für diese Ausführungsform erfindungswesentlich, daß man gegen Ende der Vorkondensation a₁) pro Mol eingesetztes Amino-s-triazin 0,01 bis 1,0 Mol, insbesondere 0,05 bis 0,5 Mol, eines Polyoxyalkylen-Derivates der allgemeinen Formel (I) zugibt, 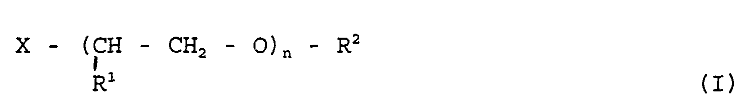 wobei
- X =: -NH₂, -NH-CO-NH₂, -O-CO-NH₂ oder -O-CO-NH-R³-NH-CO-Z
- R¹ =: H, aliphatischer Kohlenwasserstoffrest mit 1 bis 4 C-Atomen
- R² =: H, aliphatischer Kohlenwasserstoffrest mit 1 bis 20 C-Atomen, cycloaliphatischer Rest mit 5 bis 8 C-Atomen oder ggf. substituierter aromatischer Kohlenwasserstoffrest mit 6 bis 10 C-Atomen sowie 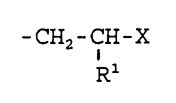
- R³ =: aliphatischer Kohlenwasserstoffrest mit 2 bis 18 C-Atomen, cycloaliphatischer Kohlenwasserstoffrest mit 4 bis 15 C-Atomen, aromatischer Kohlenwasserstoffrest mit 6 bis 15 C-Atomen, ein araliphatischer Kohlenwasserstoffrest mit 8 bis 15 C-Atomen
- Z =: -NH₂, -NH-CO-NH₂
- n =: 1 bis 100
bedeutet.

Als mono- oder difunktionelle Polyoxyalkylenglykolamine (X = -NH₂), -ureide (X = -NH-CO-NH₂) oder -carbamate (X = -O-CO-NH₂) werden bevorzugt die entsprechenden Ethylen- bzw. Propylenoxid-Verbindungen verwendet. Die aliphatischen Kohlenwasserstoffreste R¹ und R² können hierbei geradlinig oder verzweigt bzw. auch ungesättigt sein. Als aromatische Kohlenwasserstoffe werden Phenyl- oder Naphthylreste bevorzugt eingesetzt. Im Falle von R² = Phenyl kann der Phenylrest noch Substituenten aufweisen, wobei C₁- bis C₂₀-Alkylreste sowie Hydroxyl- oder Sulfonsäuregruppen bevorzugt sind.

Bei den Polyoxyalkylen-Derivaten mit X = -O-CO-NH-R³-NH-CO-Z bedeutet R³ einen aliphatischen Kohlenwasserstoffrest mit 2 bis 18, vorzugsweise 6 bis lO C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen sowie Z = -NH₂ bzw. -NH-CO-NH₂. Die Herstellung der entsprechenden Derivate erfolgt durch zweistufige Umsetzung einer bifunktionellen Isocyanatkomponente R³(NCO)₂ in einem ersten Reaktionsschritt mit einem Äquivalent Polyalkylenglykol zum NCO-terminierten Polyurethan-Prepolymer und anschließender Reaktion mit Ammoniak bzw. Harnstoff zum entsprechenden Harnstoff- bzw. Biuretderivat.

Als Isocyanat-Komponenten R³(NCO)₂ werden zweckmäßig die technisch leicht zugänglichen aromatischen Diisocyanate, wie z.B. das 2,4- oder 2,6-Toluoldiisocyanat (TDI) sowie beliebige Gemische dieser Isomeren, 1,5-Naphthalindiisocyanat (NDI), aliphatische Diisocyanate, wie z. B. 1,6-Diisocyanatohexan (HDI), cycloaliphatische Diisocyanate, wie z. B. 2,4- und 4,4-Diisocyanatodicyclohexylmethan (Desmodur W) und 3-(Isocyanatomethyl)-3,5,5-trimethylcyclohexylisocyanat (IPDI) sowie araliphatische Diisocyanate wie 1,3-bis(1-isocyanato-1-methylethyl)benzol (TMXDI) eingesetzt.

Gemäß einer bevorzugten Ausführungsform wird das Molverhältnis von Amino-s-triazin zu Formaldehyd in der Reaktionsstufe a₁) auf 1 : 1,5 bis 3,5 und das Molverhältnis Amino-s-triazin zu Polyoxyalkylen-Derivat so eingestellt, daß die Summe von Sulfit und Polyoxyalkylen-Derivat 0,5 bis 1,5 Mol pro Mol Amino-s-triazin beträgt.

Gemäß einer zweiten alternativen Ausführungsform erfolgt die Vorkondensation entsprechend der Reaktionsstufe a₂), daß man ein Aldehydsäure-Derivat der allgemeinen Formel (II)

H - CO - R⁴ (II)

mit R⁴ = -COOH oder ein Phenylrest mit -COOH, -SO₃H oder -PO₃H₂ bzw. deren ein- oder zweiwertige Salze zuerst mit dem Amino-s-triazin in einer Menge von 0,01 bis 1,5 Mol, vorzugsweise 0,05 bis 1,0 Mol, pro Mol Amino-s-triazin bei einem pH-Wert von 4,5 bis 6,5 und einer Temperatur von 20 bis 90°C umsetzt und anschließend mit Formaldehyd in einer Menge von 0,5 bis 5,0 Mol, vorzugsweise 1,5 bis 3,5 Mol pro Mol Amino-s-triazin unter Zugabe von Sulfit und gegebenenfalls einem Polyoxyalkylen-Derivat bei einem pH-Wert von 9,0 bis 12,0 und einer Temperatur von 40 bis 90°C reagieren läßt.

Bevorzugte Aldehydsäure-Derivate sind Aldehydcarbon-, Sulfon-bzw. Phosphonsäuren und insbesondere Glyoxylsäure, Benzaldehydcarbonsäure, Benzaldehydsulfonsäure und Benzaldehyddisulfonsäure. Als ein- oder zweiwertige Salze dieser Aldehydsäure-Derivate finden vorzugsweise Alkalisalze, wie z. B. Natrium- oder Kaliumsalze, Erdalkalisalze, wie z. B. Calciumsalze, sowie Ammoniumsalze oder Salze von organischen Aminen Verwendung.

Die pH-Wert-Einstellung in den Reaktionsstufen a₁) und a₂) kann mit den üblichen alkalisch reagierenden Verbindungen oder Salzen, insbesondere Hydroxiden, erfolgen. Aus Kostengründen wird zur alkalischen pH-Wert-Einstellung vorzugsweise Natronlauge verwendet.

Wird entsprechend der Reaktionsstufe a₂) noch ein Polyoxyalkylen-Derivat zugesetzt, so sollte vorzugsweise die Summe von Aldehydsäure-Derivat, Sulfit und Polyoxyalkylen-Derivat 0,5 bis 1,5 Mol pro Mol Amino-s-triazin betragen. Die Kondensationsreaktion wird in wäßriger Lösung durchgeführt, wobei die Gesamtkonzentration der Reaktionsmischung bevorzugt so eingestellt wird, daß das fertige Kondensationsprodukt mit einem Feststoffgehalt von 20 bis 50 Gew.-% anfällt.

Im Anschluß an die Reaktionsstufe a₁) oder a₂) wird dann das Vorkondensat bei einem pH-Wert von 3,0 bis 7,0 und einer Temperatur von 40 bis 90°C so lange weiterkondensiert, bis die Viskosität der Lösung bei 20°C und einem Feststoffgehalt von 20 Gew.-% einen Wert von 2 bis 10 cSt aufweist. Der saure pH-Wert in der zweiten Reaktionsstufe b), der vorzugsweise 4,5 bis 6,0 beträgt, wird mit den üblichen Säuren oder sauer reagierenden Verbindungen oder Salzen eingestellt, wobei anorganische Mineralsalze und insbesondere Schwefelsäure aus Kostengründen bevorzugt werden. Ebenfalls bevorzugt sind solche Säuren, die noch zusätzliche Sulfonsäuregruppen enthalten und diese Sulfonsäuregruppen in das Kondensationsprodukt einführen können, wie z. B. Sulfanilsäure und/oder Amidosulfonsäure, und zwar insbesondere in einer Menge von bis zu 0,7 Mol pro Mol Amino-s-triazin.

Die Kondensationsreaktion, die vorzugsweise bei einer Temperatur von 50 bis 70°C durchgeführt wird, ist dann beendet, wenn die Viskosität der wäßrigen Lösung bei 20°C und einem Feststoffgehalt von 20 Gew.-% einen Wert von 2 bis lO cSt aufweist. Die Kondensationsreaktion wird anschließend durch Zugabe einer basischen Verbindung und Einstellung eines basischen pH-Wertes abgebrochen.

Sollten die erfindungsgemäßen Polykondensationsprodukte noch einen relativ hohen Anteil an freiem Formaldehydgehalt aufweisen, ist es im Rahmen der vorliegenden Erfindung noch möglich, diesen freien Formaldehydgehalt durch eine alkalische Nachbehandlung bei erhöhter Temperatur bspw. entsprechend der EP-PS 336 165 zu reduzieren. Falls erforderlich oder gewünscht, können die Polykondensationsprodukte durch destillative Abtrennung des Wassers, durch Ausfällung in einem geeigneten Lösemittel oder durch Sprühtrocknung in die feste Form übergeführt werden.

Die erfindungsgemäßen Polykondensationsprodukte eignen sich besonders als Zusatzmittel für wäßrige Suspensionen auf Basis von anorganischen Bindemitteln, insbesondere Zement, Kalk, Gips, wobei sie in einer Menge von 0,01 bis 10 Gew.-%, vorzugsweise 0,1 bis 5 Gew.-%, bezogen auf das Gewicht des anorganischen Bindemittels, eingesetzt werden. Im Vergleich zu wasserlöslichen Aminoplastkondensationsprodukten entsprechend dem Stand der Technik verleihen die erfindungsgemäßen Polykondensationsprodukte den entsprechend hergestellten Baustoffmischungen eine wesentlich längere Verarbeitbarkeit, ohne dabei die positiven anwendungstechnischen Eigenschaften, wie hohe Frühfestigkeiten, Unempfindlichkeit gegenüber Überdosierungen und geringe Lufteinführung, zu verlieren.

Die nachfolgenden Beispiele sollen die Erfindung näher erläutern.

### Beispiel 1

In einem 1-l-Reaktionsgefäß mit Thermometer, Rührer, Rückflußkühler, pH-Meßeinrichtung und Tropftrichter werden 350 g (3,50 Mol) Formalin (30 %ige wäßrige Lösung) und 290 g Wasser vorgelegt. Mit einigen Tropfen 20 %iger wäßriger Natronlauge wird ein pH-Wert von 8,5 eingestellt. Unter Rühren werden danach 126 g (1,00 Mol) Melamin in die Reaktionslösung eingetragen. Anschließend werden 90,5 g (0,475 Mol) Natriumdisulfit sowie 12,5 g 20 %ige wäßrige Natronlauge zugesetzt, um einen pH-Wert von 10,5 einzustellen. Die Reaktorinnentemperatur, die dabei bereits auf 58°C angestiegen ist, wird durch Aufheizen auf 70°C erhöht und das Reaktionsgemisch 100 Minuten bei dieser Temperatur gerührt. Über einen Zeitraum von 30 Minuten werden danach 100 g (0,20 Mol) Methylpolyethylenglykolamin (mittleres Molekulargewicht 500) in 125 g Wasser zugesetzt und das erhaltene Gemisch 30 Minuten bei 70°C und einem pH-Wert von 11,03 gerührt.

Unter Beibehaltung einer Reaktorinnentemperatur von 70°C werden 67 g 20 %ige wäßrige Schwefelsäure zugegeben, und bei einem pH-Wert von 5,10 wird bis zu einer Endviskosität von 9 cSt (nach Ubbelohde bei 70°C) kondensiert, was einer Viskosität von 6,03 cSt bei 20°C gemessen an einer 20 gew.-%igen Lösung entspricht.

Anschließend wird durch Zugabe von 15,3 g wäßriger 50 %iger Natronlauge unter Rühren ein pH-Wert von 10,03 eingestellt und das Reaktionsgemisch auf 25°C abgekühlt.

Die erhaltene klare wäßrige Lösung des modifizierten Melamin-Formaldehyd-Polykondensates hat einen Feststoffgehalt von 34,1 Gew.-%.

### Beispiel 2

Ein analog zu Beispiel 1 bei 70°C hergestelltes Melamin-Formaldehyd-Sulfit-Vorkondensat aus 333 g (3,33 Mol) Formalin (30 %ig), 126 g (1,00 Mol) Melamin, 100 g (0,53 Mol) Natriumdisulfit und 12,5 g 20 %iger Natronlauge in 290 g Wasser wird, nachdem kein Sulfit mehr nachweisbar ist, mit 50 g (0,10 Mol) Methylpolyethylenglykolamin (mittleres Molekulargewicht 500) in 75 g Wasser versetzt, wobei der pH-Wert von 11,13 auf 11,23 ansteigt.

Unmittelbar danach werden 96 g 10 %ige wäßrige Schwefelsäure zugegeben, wobei sich ein pH-Wert von 5,33 einstellt. Bei einer Reaktorinnentemperatur von 70°C wird bis zu einer Endviskosität von 4,5 cSt nach Ubbelohde kondensiert (3,96 cSt bei 20°C, 20 gew.-%ige Lösung).

Die wasserklare Lösung wird durch Zugabe von 24 g 20 %ige Natronlauge auf einen pH-Wert von 10,15 eingestellt und abgekühlt. Die wäßrige Polykondensatlösung hat einen Feststoffgehalt von 32,1 Gew.-%.

### Beispiel 3

Es wird verfahren wie unter Beispiel 2 beschrieben, jedoch mit folgenden Chemikalieneinsatzmengen:

| | |
|---|---|
| 350 g | (3,50 Mol) Formalin (30 %) |
| 126 g | (1,00 Mol) Melamin |
| 86 g | (0,45 Mol) Natriumdisulfit |
| 20 g | Natronlauge (20 %) |
| 180 g | Wasser |
| 80 g | Schwefelsäure (20 %) |
| 150 g | ( 0,30 Mol) Methylpolyethylenglykolamin (mittleres Molekulargewicht 500) in 225 g Wasser |

Die Kondensation wird bei einem pH-Wert von 5,23 durchgeführt und nach Erreichen einer Ubbelohde-Endviskosität von 13 cSt bei 70°C durch Zugabe von 18 g 50 %ige wäßrige Natronlauge beendet. Die Viskosität einer 20 gew.-%igen Lösung beträgt 6,47 cSt bei 20°C.

Die wasserklare Lösung weist einen Feststoffgehalt von 36,9 Gew.-% auf bei einem pH-Wert bei 25°C von 10,54.

### Beispiel 4

Die unter Beispiel 2 beschriebene Umsetzung wird mit folgenden Mengen wiederholt:

| | |
|---|---|
| 350 g | (3,50 Mol) Formalin (30 %) |
| 126 g | (1,00 Mol) Melamin |
| 52 g | (0,27 Mol) Natriumdisulfit |
| 37 g | Natronlauge (50 %) |
| 260 g | Wasser |
| 50 g | (0,10 Mol) Methylpolyethylenglykolamin (mittleres Molekulargewicht 500) in 75 g Wasser |

Im Gegensatz zu den in den Beispielen 1 bis 3 beschriebenen Verfahren erfolgt die Vorkondensatbildung und die Polykondensation bei einer Reaktionstemperatur von 50°C, wobei der pH-Wert in Stufe b) mit 96 g Sulfanilsäure eingestellt wird. Es wird bis zu einer Viskosität von 4,60 cSt (20 gew.-%ige Lösung, 20°C) kondensiert, und es verbleibt nach Abbruch der Kondensation (Zugabe von 28,9 g 50 %ige Natronlauge) eine klare, schwarzgefärbte Lösung mit einem Feststoffgehalt von 37,1 Gew.-%.

### Beispiel 5

In dem in Beispiel 1 beschriebenen Reaktionsgefäß werden 30 g (0,20 Mol) 50 %ige wäßrige Glyoxylsäure und 300 g Wasser vorgelegt. Mit 16 g 50 %iger Natronlauge wird unter Rühren ein pH-Wert von 4,30 eingestellt und 126 g (1,00 Mol) Melamin zugegeben. Das Reaktionsgemisch wird auf 50°C aufgeheizt und 1 Stunde bei dieser Temperatur gerührt, wobei der pH-Wert auf 5,78 ansteigt.

Nacheinander werden anschließend 300 g (3,00 Mol) Formalin (30 %) und 52 g (0,27 Mol) Natriumdisulfit sowie 41,3 g Natronlauge (50 %) zugesetzt und 50 Minuten bei 50°C gerührt (Sulfomethylierung).

Sobald kein Sulfit mehr nachzuweisen ist, wird das Reaktionsgemisch durch Zugabe von 96 g Sulfanilsäure auf einen pH-Wert von 5,50 gestellt und bis zu einer Endviskosität von 30,0 cSt kondensiert entsprechend 5,08 cSt bei 20°C (20 gew.-%ige Lösung). Die dunkel gefärbte Reaktionslösung wird mit 11,5 g NaOH (50 %) alkalisch gestellt. Sie hat einen Feststoffgehalt von 37,7 Gew.-%.

### Beispiel 6

Beispiel 5 wird wiederholt, jedoch werden statt der dort verwendeten Glyoxylsäure 65,2 g (0,20 Mol) 2-Benzaldehydsulfonsäure eingesetzt.

Des weiteren werden die Einsatzmengen wie folgt verändert:

| | |
|---|---|
| 330 g | (3,30 Mol) Formalin (30 %) |
| 350 g | Wasser |
| 126 g | (1,00 Mol) Melamin |
| 37 g | NaOH (50 %) |
| 48 g | (0,25 Mol) Natriumdisulfit |

Die Einstellung des Kondensations-pH-Wertes erfolgt mit Sulfanilsäure. Die Kondensation wird bei einer Viskosität von 25,0 cSt (70°C) entsprechend 5,18 cSt bei 20°C (20 gew.-%ige Lösung) durch Zugabe von 28,6 g NaOH (50 %) abgebrochen. Erhalten wird eine klare Lösung, die 37,3 Gew.-% Feststoff enthält.

### Beispiel 7

Die Umsetzung erfolgt analog zu dem in Beispiel 6 beschriebenen Verfahren, jedoch mit 32,6 g (0,10 Mol) 2-Benzaldehydsulfonsäure. Das Endprodukt hat eine Viskosität von 25 cSt (50°C) bzw. 4,78 cSt (20°C, 20 gew.-%ige Lösung) und einen Feststoffgehalt von 36,4 Gew.-%.

### Beispiel 8

Nach der in Beispiel 5 beschriebenen Vorgehensweise wird zunächst ein Vorkondensat aus Melamin und 2-Formylbenzoesäure hergestellt, welches unter alkalischen Bedingungen bei pH 11,53 sulfomethyloliert wird wie in Beispiel 5 beschrieben. Die Polykondensation erfolgte bei pH 5,30 bis zu einer Ubbelohde-Endviskosität von 25,0 cSt, gemessen bei 50°C entsprechend 4,82 cSt bei 20°C (20 gew.-%ige Lösung). Die erhaltene wäßrige Polykondensatlösung weist nach Neutralisation mit NaOH (50 %) einen pH von 10,60 und einen Feststoffgehalt von 36,9 Gew.-% auf.

### Beispiel 9

Beispiel 5 wird wiederholt, jedoch mit 220 g (2,20 Mol) Formalin (30 %). Das Endprodukt hat eine Viskosität von 2,97 cSt (20°C, 20 gew.-%ige Lösung) und einen Feststoffgehalt von 38,4 Gew.-% und enthält 0,1 Gew.-% freies Formaldehyd.

### Beispiel 10

In der in Beispiel 1 beschriebenen Apparatur werden 330 g (3,30 Mol) Formalin (30 %ige wäßrige Lösung) und 270 g Wasser vorgelegt. Mit 20 %iger wäßriger Natronlauge wird ein pH-Wert von 8,5 eingestellt und im Anschluß daran werden nacheinander 100,8 g (0,80 Mol) Melamin, 12,0 g (0,20 Mol) Harnstoff, 72,2 g (0,38 Mol) Natriumdisulfit sowie 12 g 20 %ige wäßrige Natronlauge unter Rühren zugesetzt. Die Temperatur wird auf 70°C erhöht und das Reaktionsgemisch bei dieser Temperatur 70 Minuten gerührt. Anschließend werden 75 g (0,15 Mol) Methylpolyethylenglykolamin (mittleres Molekulargewicht 500) in 90 g Wasser zugesetzt und das erhaltene Gemisch 45 Minuten bei 70°C gerührt.

Danach wird durch Zugabe von 20 %iger Schwefelsäure ein pH-Wert von 5,15 eingestellt und bis zu einer Endviskosität von 8 cSt (70°C, Ubbelohde) kondensiert. Durch Zugabe von 50 %iger wäßriger Natronlauge wird ein pH-Wert von 10,40 eingestellt und abgekühlt. Die klare wäßrige Lösung des Endproduktes enthält 35 Gew.-% Feststoff (Viskosität einer 20 gew.-%igen Lösung: 5,29 cSt bei 20°C).

### Beispiel 11

Beispiel 1 wird wiederholt, jedoch werden 161,5 g (0,10 Mol) eines äquimolaren Umsetzungsproduktes aus Ammoniak, 2,4-Toluoldiisocyanat und Methylpolyethylenglykol (mittleres Molekulargewicht 500) anstelle des dort verwendeten Methylpolyethylenglykolamins (mittleres Molekulargewicht 500) verwendet. Es wird bis zu einer Endviskosität von 8,4 cSt (70°C, Ubbelohde) kondensiert und ein Produkt mit einem Feststoffgehalt von 37,3 Gew.-% erhalten, dessen 20 gew.-%ige Lösung eine Viskosität von 5,16 cSt bei 20°C aufweist.

### Vergleich 1

Handelsübliches sulfoniertes Melamin-Formaldehyd-Polykondensationsprodukt in Form des Natrium-Salzes (Melment L10).

### Vergleich 2

Handelsübliches sulfoniertes Naphthalin-Formaldehyd-Polykondensationsprodukt in Form des Natrium-Salzes (LOMAR D)

Die erhaltenen wäßrigen Polykondensationslösungen wurden einem vergleichenden Test als Zusatzmittel für zementhaltige Feststoffsuspensionen unterzogen, um ihre gegenüber herkömmlichen Fließmitteln erhöhte und länger andauernde Wirksamkeit nachzuweisen.

### Anwendungsbeispiel 1

900 g Portlandzement PZ 35 Kiefersfelden werden mit 1 350 g Normensand (Grobanteil : Feinanteil = 2 : 1) und 405 g Wasser (Wasser/Zement-Verhältnis = 0,45), welches die erfindungsgemäßen Polykondensationsprodukte in gelöster Form enthält, in einem Mischer normgerecht angerührt.

Bezogen auf den Feststoffanteil der wäßrigen Kondensatlösungen wird eine einheitliche Dosierung von 0,50 Gew.-% bezüglich Zement vorgenommen.

Unmittelbar nach Herstellung des Zementmörtels wird das Fließmaß sowie dessen zeitliche Veränderung über einen Zeitraum von 60 Minuten ermittelt. Hierzu wird eine Edelstahl-Fließrinne von 80 cm Länge mit Einfülltrichter (1 000 ml Füllmenge) verwendet. Die verflüssigende Wirkung eines Fließmittels ist umso besser, je größer der Weg ist, den eine konstante Frischmörtelmenge innerhalb eines Zeitraums von 120 sec in der Fließrinne zurückgelegt hat. Die Ergebnisse dieser vergleichenden Testung sind in der Tabelle 1 zusammengestellt.

**Tabelle 1**

| Fließverhalten von Mörtelmischungen mit erfindungsgemäßen und Vergleichsprodukten | | | | |
|---|---|---|---|---|
| Zusatzmittel | Feststoff Gew.-% | Fließmaß in mm | | |
| | | sofort | nach 30 min. | nach 60 min. |
| Bsp. 1 | 34,1 | 480 | 490 | 460 |
| Bsp. 2 | 32,1 | 590 | 570 | 510 |
| Bsp. 3 | 36,9 | 400 | 410 | 390 |
| Bsp. 4 | 37,1 | 610 | 690 | 620 |
| Bsp. 5 | 37,7 | 670 | 640 | 570 |
| Bsp. 6 | 37,3 | 620 | 520 | 480 |
| Bsp. 7 | 36,4 | 620 | 570 | 490 |
| Bsp. 8 | 36,9 | 620 | 570 | 520 |
| Bsp. 9 | 38,4 | 610 | 600 | 500 |
| Bsp. 10 | 35,0 | 470 | 480 | 470 |
| Bsp. 11 | 38,2 | 430 | 440 | 440 |
| Vgl. 1 | 40,5 | 340 | 220 | 190 |
| Vgl. 2 | 37,0 | 470 | 430 | 310 |
| Wasser-Zement-Wert: 0,45 Dosierung: 0,50 Gew.-% auf PZ 35 Kiefersfelden bezogen | | | | |

Um die Abbinde- und Lufteinführungseigenschaften der erfindungsgemäßen Produkte nachzuweisen, wurden vergleichende Tests in Betonmischungen durchgeführt.

### Anwendungsbeispiel 2

Normgemäß werden in einem Betonzwangsmischer 5,3 kg Portlandzement (PZ 35 Kiefersfelden) mit 33,0 kg Zuschlägen (Sieblinie 0 - 32 mm) und 2,65 kg Wasser (abzüglich des Wassers aus dem Zusatzmittel) vermischt. Die wäßrigen Lösungen der erfindungsgemäßen bzw. der Vergleichsprodukte werden zugesetzt und 10 Minuten nach Zugabe der Fließmittel erfolgt die Bestimmung des Ausbreitmaßes nach DIN 1048 (Doppelbestimmung).

Im Anschluß an die Messung der Ausbreitmaße werden Prüfkörper mit 15 x 15 x 15 cm Kantenlänge hergestellt und die Druckfestigkeit nach 24 Stunden sowie der Luftporenanteil bestimmt. Die Ergebnisse sind in Tabelle 2 zusammengefaßt.

**Tabelle 2**

| Betontestung nach DIN 1048 | | | | | |
|---|---|---|---|---|---|
| Zusatzmittel | Dosierung % auf PZ | Ausbreitmaß in [mm] | Rohdichte [kg/m³] | Luft [Vol.-%] | 24-h-Festigkeit [N/mm²] |
| Bsp. 1 | 0,48 | 575 | 2,49 | 2,5 | 13,9 |
| Bsp. 2 | 0,43 | 550 | 2,50 | 2,1 | 14,5 |
| Bsp. 3 | 0,48 | 540 | 2,48 | 3,4 | 13,4 |
| Bsp. 4 | 0,43 | 575 | 2,51 | 1,1 | 14,0 |
| Bsp. 5 | 0,41 | 585 | 2,51 | 1,4 | 12,9 |
| Bsp. 6 | 0,43 | 580 | 2,50 | 2,0 | 12,3 |
| Bsp. 7 | 0,43 | 575 | 2,50 | 2,2 | 13,3 |
| Bsp. 8 | 0,43 | 570 | 2,49 | 2,9 | 13,9 |
| Bsp. 9 | 0,40 | 575 | 2,51 | 0,9 | 12,7 |
| Bsp. 10 | 0,47 | 545 | 2,50 | 1,9 | 14,5 |
| Bsp. 11 | 0,47 | 560 | 2,48 | 3,0 | 12,9 |
| Vgl. 1 | 0,47 | 545 | 2,50 | 1,9 | 14,5 |
| Vgl. 2 | 0,45 | 555 | 2,47 | 3,8 | 12,0 |

## Patentansprüche

1. Wasserlösliches Kondensationsprodukt aus Amino-s-triazin, Formaldehyd und Sulfit im Molverhältnis 1 : 0,5 bis 5,0 : 0,1 bis 1,5,
**dadurch gekennzeichnet,**
daß es pro Mol Amino-s-triazin 0,01 bis 1,0 Mol eines Polyoxyalkylen-Derivats der allgemeinen Formel (I) 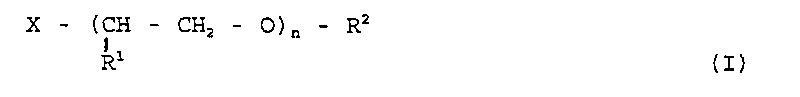 worin
X = -NH₂, -NH-CO-NH₂, -O-CO-NH₂ oder -O-CO-NH-R³-NH-CO-Z
R¹ = H oder einen aliphatischen Kohlenwasserstoffrest mit 1 bis 4 C-Atomen
R² = H oder einen aliphatischen Kohlenwasserstoffrest mit 1 bis 20 C-Atomen, einen cycloaliphatischen Rest mit 5 bis 8 C-Atomen oder einen ggf. substituierten aromatischen Kohlenwasserstoffrest mit 6 bis 10 C-Atomen oder 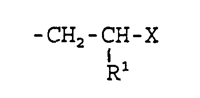
worin
R³ = einen aliphatischen Kohlenwasserstoffrest mit 2 bis 18 C-Atomen, einen cycloaliphatischen Kohlenwasserstoffrest mit 4 bis 15 C-Atomen, einen aromatischen Kohlenwasserstoffrest mit 6 bis 15 C-Atomen oder einen araliphatischen Kohlenwasserstoffrest mit 8 bis 15 C-Atomen
Z = -NH₂, -NH-CO-NH₂ und
n = eine Zahl 1 bis 100
bedeuten
oder/und
0,01 bis 1,5 Mol eines Aldehydsäure-Derivats der allgemeinen Formel (II)
H - C0 - R⁴ (II)
worin R⁴ = COOH oder einen Phenylrest mit -COOH, -SO₃H oder -PO₃H₂ bzw. deren ein- oder zweiwertige Salze bedeuten, einkondensiert enthält, wobei eine wäßrige Lösung mit einem Feststoffgehalt von 20 Gew.-% des Kondensationsproduktes bei 20 °C eine Viskosität von 2-10 x 10⁻⁶ m²/s (2 bis 10 cSt) aufweist.

2. Kondensationsprodukt nach Anspruch 1,
**dadurch gekennzeichnet,**
daß es die Verbindung der allgemeinen Formel (I) mit
X = -NH₂ oder -O-CO-NH-R³-NH-CO-Z,
R¹ = H oder CH₃,
R³ = Toluylen oder Xylylen,
Z = NH₂ und
n = 7 bis 15
enthält.

3. Kondensationsprodukt nach Anspruch 1,
**dadurch gekennzeichnet,**
daß es als Verbindung der allgemeinen Formel (II) wenigstens eine Verbindung aus der Gruppe Glyoxylsäure, Benzaldehydsulfonsäure und Formylbenzoesäure enthält.

4. Kondensationsprodukt nach einem der vorhergehenden Ansprüche,
**dadurch gekennzeichnet,**
daß das Amino-s-triazin ganz oder überwiegend aus Melamin besteht.

5. Kondensationsprodukt nach einem der vorhergehenden Ansprüche,
**dadurch gekennzeichnet,**
daß bis zu 50 Mol.-% des Amino-s-triazins durch einen oder mehrere andere Aminoplastbildner aus der Gruppe Harnstoff, Thioharnstoff, Dicyandiamid oder Guanidin(-Salze) ersetzt ist.

6. Kondensationsprodukt nach einem der vorhergehenden Ansprüche,
**dadurch gekennzeichnet,**
daß das Molverhältnis von Amino-s-triazin zu Formaldehyd 1 : 1,5 bis 3,5 ist.

7. Kondensationsprodukt nach Anspruch 1 oder 2,
**dadurch gekennzeichnet,**
daß die Summe von Sulfit und Polyoxyalkylen-Derivat 0,5 bis 1,5 Mol pro Mol Amino-s-triazin beträgt.

8. Kondensationsprodukt nach Anspruch 1 oder 3,
**dadurch gekennzeichnet,**
daß die Summe von Aldehydsäure-Derivat und Sulfit und gegebenenfalls Polyoxyalkylen-Derivat 0,5 bis 1,5 Mol pro Mol Amino-s-triazin beträgt.

9. Polykondensationsprodukt nach Anspruch 1,
**dadurch gekennzeichnet,**
daß im Falle von R² = Phenyl der Phenylrest noch mindestens einen Substituenten aus der Gruppe C₁-C₂₀-Alkylreste, Hydroxylgruppen und Sulfonsäuregruppen aufweist.

10. Verfahren zur Herstellung von wasserlöslichen Polykondensationsprodukten auf Basis von Amino-s-triazinen durch Kondensation in zwei Stufen,
**dadurch gekennzeichnet,** daß man
a₁) Amino-s-triazin, Formaldehyd und Sulfit im Molverhältnis 1 : 0,5 bis 5,0 : 0,1 bis 1,5 in wäßriger Lösung bei einem pH-Wert von 9,0 bis 12,0 und einer Temperatur von 40 bis 90°C so lange kondensiert, bis das Sulfit nicht mehr nachweisbar ist und gegen Ende der Vorkondensation pro Mol eingesetztes Amino-s-triazin 0,01 bis 1,0 Mol eines Polyoxyalkylen-Derivats der allgemeinen Formel (I) zugibt 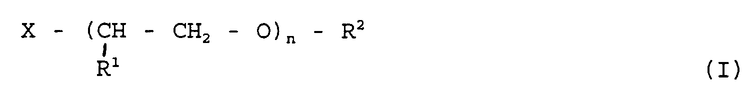 worin
X = -NH₂, -NH-CO-NH₂, -O-CO-NH₂ oder -O-CO-NH-R³-NH-CO-Z
R¹ = H oder einen aliphatischen Kohlenwasserstoffrest mit 1 bis 4 C-Atomen
R² = H oder einen aliphatischen Kohlenwasserstoffrest mit 1 bis 20 C-Atomen, einen cycloaliphatischen Rest mit 5 bis 8 C-Atomen oder einen ggf. substituierten aromatischen Kohlenwasserstoffrest mit 6 bis 10 C-Atomen oder 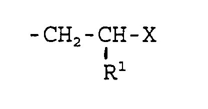
worin
R³ = einen aliphatischen Kohlenwasserstoffrest mit 2 bis 18 C-Atomen, einen cycloaliphatischen Kohlenwasserstoffrest mit 4 bis 15 C-Atomen, einen aromatischen Kohlenwasserstoffrest mit 6 bis 15 C-Atomen oder einen araliphatischen Kohlenwasserstoffrest mit 8 bis 15 C-Atomen
Z = -NH₂, -NH-CO-NH₂ und
n = eine Zahl 1 bis 100
bedeuten
oder/und
a₂) ein Aldehydsäure-Derivat der allgemeinen Formel (II)
H - C0 - R⁴ (II)
worin R⁴ = COOH oder einen Phenylrest mit -COOH, -S0₃H oder -P0₃H₂ bzw. deren ein- oder zweiwertige Salze bedeuten,
zuerst mit dem Amino-s-triazin in einer Menge von 0,01 bis 1,5 Mol pro Mol Amino-s-triazin bei einem pH-Wert von 4,5 bis 6,5 und einer Temperatur von 20 bis 90°C und anschließend mit Formaldehyd in einer Menge von 0,5 bis 5,0 Mol pro Mol Amino-s-triazin ggf. unter Zugabe von Sulfit und/oder einem Polyoxyalkylen-Derivat bei einem pH-Wert von 9,0 bis 12,0 und einer Temperatur von 40 bis 90°C reagieren läßt und
b) im Anschluß an die Stufe a₁) oder a₂) bei einem pH-Wert von 3,0 bis 7,0 und einer Temperatur von 40 bis 90°C so lange weiterkondensiert, bis die Viskosität der Lösung bei 20°C und einem Feststoffgehalt von 20 Gew.-% einen Wert von 2 bis 10 cSt aufweist.

11. Verfahren nach Anspruch 10,
**dadurch gekennzeichnet,**
daß als Amino-s-triazin Melamin eingesetzt wird.

12. Verfahren nach den Ansprüchen 10 oder 11,
**dadurch gekennzeichnet,**
daß bis zu 50 Mol-% des Amino-s-triazins durch ein oder mehrere andere Aminoplastbildner, ausgewählt aus der Gruppe Harnstoff, Thioharnstoff, Dicyandiamid oder Guanidin(-Salze), ersetzt werden.

13. Verfahren nach einem der Ansprüche 10 bis 12,
**dadurch gekennzeichnet,**
daß das Molverhältnis Amino-s-triazin zu Formaldehyd in den Stufen a₁) und a₂) auf 1 : 1,5 bis 3,5 eingestellt wird.

14. Verfahren nach einem der Ansprüche 10 bis 13,
**dadurch gekennzeichnet,**
daß das Molverhältnis Amino-s-triazin zu Polyoxyalkylen-Derivat in Stufe a₁) so eingestellt wird, daß die Summe von Sulfit und Polyoxyalkylen-Derivat 0,5 bis 1,5 Mol pro Mol Amino-s-triazin beträgt.

15. Verfahren nach einem der Ansprüche 10 bis 14,
**dadurch gekennzeichnet,**
daß das Molverhältnis Amino-s-triazin zu Sulfit und/oder Polyoxyalkylen-Derivat in Stufe a₂) so eingestellt wird, daß die Summe von Aldehydsäure-Derivat und Sulfit bzw. Polyoxyalkylen-Derivat 0,5 bis 1,5 Mol pro Mol Amino-s-triazin beträgt.

16. Verfahren nach einem der Ansprüche 10 bis 15,
**dadurch gekennzeichnet,**
daß im Falle von R² = Phenyl der Phenylrest noch mit C₁- bis C₂₀-Alkylresten, Hydroxyl- oder Sulfonsäuregruppen substituiert ist.

17. Verfahren nach einem der Ansprüche 10 bis 15,
**dadurch gekennzeichnet,**
daß als Aldehydsäure-Derivat eine Aldehydcarbon- oder Aldehydsulfonsäure, ausgewählt aus der Gruppe Glyoxylsäure, Benzaldehydcarbonsäure, Benzaldehydsulfonsäure und Benzaldehyddisulfonsäure eingesetzt wird.

18. Verfahren nach einem der Ansprüche 10 bis 17,
**dadurch gekennzeichnet,**
daß als ein- oder zweiwertige Salze der Aldehydsäure-Derivate Alkalisalze, wie z. B. Natrium- oder Kaliumsalze, Erdalkalisalze, wie z. B. Calciumsalze, sowie Ammoniumsalze oder Salze von organischen Aminen eingesetzt werden.

19. Verfahren nach einem der Ansprüche 10 bis 18,
**dadurch gekennzeichnet,**
daß die Gesamtkonzentration der Reaktionskomponenten in der wäßrigen Lösung so eingestellt wird, daß das Polykondensationsprodukt mit einem Feststoffgehalt von 20 bis 50 Gew.-% anfällt.

20. Verfahren nach einem der Ansprüche 10 bis 19,
**dadurch gekennzeichnet,**
daß die Kondensation in Stufe b) bei einem pH-Wert von 4,5 bis 6,0 erfolgt.

21. Verfahren nach einem der Ansprüche 10 bis 20,
**dadurch gekennzeichnet,**
daß zur pH-Wert-Einstellung in Stufe b) zusätzliche Sulfonsäuregruppen einführende Verbindungen in einer Menge von bis zu 0,7 Mol pro Mol Amino-s-triazin herangezogen werden.

22. Verfahren nach Anspruch 21,
**dadurch gekennzeichnet,**
daß als zusätzliche Sulfonsäuregruppen einführende Verbindung Sulfanilsäure und/oder Amidosulfonsäure verwendet wird.

23. Verfahren nach einem der Ansprüche 10 bis 22,
**dadurch gekennzeichnet,**
daß die Temperatur in Stufe b) auf 50 bis 70°C eingestellt wird.

24. Verwendung der Polykondensationsprodukte nach den Ansprüchen 1 bis 23 als Zusatzmittel für wäßrige Suspensionen auf Basis von anorganischen Bindemitteln, insbesondere Zement, Kalk, Gips.

25. Verwendung der Polykondensationsprodukte nach Anspruch 24,
**dadurch gekennzeichnet,**
daß sie in einer Menge von 0,01 bis 10 Gew.-%, bezogen auf das Gewicht des anorganischen Bindemittels eingesetzt werden.

26. Verwendung nach Anspruch 25,
**dadurch gekennzeichnet,**
daß die Polykondensationsprodukte in einer Menge von 0,1 bis 5 Gew.-%, bezogen auf das Gewicht des anorganischen Bindemittels eingesetzt werden.

## Claims

1. Water-soluble condensation product of amino-s-triazine, formaldehyde and sulphite in a molar ratio 1 : 0.5 to 5.0 : 0.1 to 1.5, **wherein**
per mole amino-s-triazine, it contains 0.01 to 1.0 mole of a polyoxyalkylene derivative of the general formula (I) 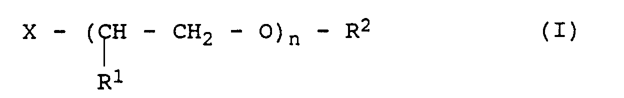 in which
X = -NH₂, -NH-CO-NH₂, -O-CO-NH₂ or -O-CO-NH-R³-NH-CO-Z
R¹ = H or an aliphatic hydrocarbon residue with 1 to 4 C atoms
R² = H or an aliphatic hydrocarbon residue with 1 to 20 C atoms, a cycloaliphatic residue with 5 to 8 C atoms or an optionally substituted aromatic hydrocarbon residue with 6 to 10 C atoms or 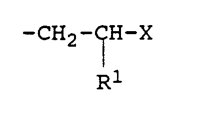
in which
R³ = an aliphatic hydrocarbon residue with 2 to 18 C atoms, a cycloaliphatic hydrocarbon residue with 4 to 15 C atoms, an aromatic hydrocarbon residue with 6 to 15 C atoms or an araliphatic hydrocarbon residue with 8 to 15 C atoms
Z = -NH₂, -NH-CO-NH₂ and
n = a number from 1 to 100
or/and 0.01 to 1.5 mole of an aldehyde acid derivative of the general formula (II)
H - CO - R⁴ (II)
in which R⁴ = COOH or a phenyl residue with -COOH, -SO₃H or -PO₃H₂ or monovalent or divalent salts thereof,
as part of the condensation product wherein an aqueous solution with a solids content of 20 % by weight of the condensation product has a viscosity of 2 - 10 x 10⁻⁶ m²/s (2 to 10 cSt) at 20°C.

2. Condensation product as claimed in claim 1,
**wherein**
it contains the compound of the general formula (I) in which
X = -NH₂ or -O-CO-NH-R³-NH-CO-Z,
R¹ = H or CH₃,
R³ = toluylene or xylylene,
Z = NH₂ and
n = 7 to 15.

3. Condensation product as claimed in claim 1,
**wherein**
as a compound of the general formula (II) it contains at least one compound from the group glyoxylic acid, benzaldehydesulphonic acid and formylbenzoic acid.

4. Condensation product as claimed in one of the previous claims,
**wherein**
the amino-s-triazine is composed wholly or predominantly of melamine.

5. Condensation product as claimed in one of the previous claims,
**wherein**
up to 50 mole % of the amino-s-triazine is replaced by one or several other aminoplast formers from the group urea, thiourea, dicyandiamide or guanidine (salts).

6. Condensation product as claimed in one of the previous claims,
**wherein**
the molar ratio of amino-s-triazine to formaldehyde is 1 : 1.5 to 3.5.

7. Condensation product as claimed in claim 1 or 2,
**wherein**
the sum of sulphite and polyoxyalkylene derivative is 0.5 to 1.5 mole per mole amino-s-triazine.

8. Condensation product as claimed in claim 1 or 3,
**wherein**
the sum of aldehyde acid derivative and sulphite and optionally polyoxyalkylene derivative is 0.5 to 1.5 mole per mole amino-s-triazine.

9. Polycondensation product as claimed in claim 1,
**wherein**
if R² is phenyl, the phenyl residue additionally has at least one substituent from the group C₁-C₂₀ alkyl residues, hydroxyl groups and sulphonic acid groups.

10. Process for the production of water-soluble polycondensation products based on amino-s-triazines by condensation in two steps
**wherein**
a₁) amino-s-triazine, formaldehyde and sulphite are condensed in a molar ratio of 1:0.5 to 5.0:0.1 to 1.5 in an aqueous solution at a pH value of 9.0 to 12.0 and at a temperature of 40 to 90°C until the sulphite is no longer detectable and towards the end of the precondensation 0.01 to 1.0 mole of a polyoxyalkylene derivative of the general formula (I) is added per mole of the amino-s-triazine used 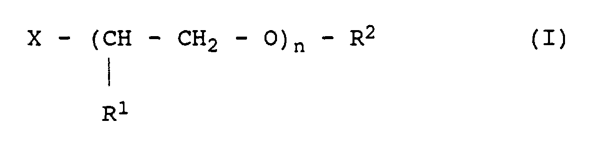 in which
X = -NH₂, -NH-CO-NH₂, -O-CO-NH₂ or -O-CO-NH-R³-NH-CO-Z
R¹ = H or an aliphatic hydrocarbon residue with 1 to 4 C atoms
R² = H or an aliphatic hydrocarbon residue with 1 to 20 C atoms, a cycloaliphatic residue with 5 to 8 C atoms or an optionally substituted aromatic hydrocarbon residue with 6 to 10 C atoms or 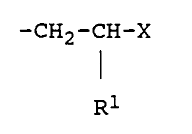
in which
R³ = an aliphatic hydrocarbon residue with 2 to 18 C atoms, a cycloaliphatic hydrocarbon residue with 4 to 15 C atoms, an aromatic hydrocarbon residue with 6 to 15 C atoms or an araliphatic hydrocarbon residue with 8 to 15 C atoms
Z = -NH₂, -NH-CO-NH₂ and
n = a number from 1 to 100
and/or
a₂) an aldehyde acid derivative of the general formula (II)
H - CO - R⁴ (II)
in which R⁴ = COOH or a phenyl residue with -COOH, -SO₃H or -PO₃H₂ or monovalent or divalent salts thereof,
is firstly allowed to react with the amino-s-triazine in an amount of 0.01 to 1.5 moles per mole amino-s-triazine at a pH value of 4.5 to 6.5 and at a temperature of 20 to 90°C and subsequently with formaldehyde in an amount of 0.5 to 5.0 moles per mole amino-s-triazine optionally with addition of sulphite and/or a polyoxyalkylene derivative at a pH value of 9.0 to 12.0 and a temperature of 40 to 90°C and
b) after step a₁) or a₂) it is allowed to condense further at a pH of 3.0 to 7.0 and a temperature of 40 to 90°C until the viscosity of the solution at 20°C and at a solids content of 20 % by weight reaches a value of 2 to 10 cSt.

11. Process as claimed in claim 10,
**wherein**
melamine is used as the amino-s-triazine.

12. Process as claimed in one of the claims 10 or 11,
**wherein**
up to 50 mole % of the amino-s-triazine is replaced by one or several other aminoplast formers from the group urea, thiourea, dicyandiamide or guanidine (salts).

13. Process as claimed in one of the claims 10 to 12,
**wherein**
the molar ratio of amino-s-triazine to formaldehyde in steps a₁) and a₂) is adjusted to 1:1.5 to 3.5.

14. Process as claimed in one of the claims 10 to 13,
**wherein**
the molar ratio of amino-s-triazine to polyoxyalkylene derivative in step a₁) is adjusted such that the sum of sulphite and polyoxyalkylene derivative is 0.5 to 1.5 mole per mole amino-s-triazine.

15. Process as claimed in one of the claims 10 to 14,
**wherein**
the molar ratio of amino-s-triazine to sulphite and/or polyoxyalkylene derivative in step a₂) is adjusted such that the sum of aldehyde acid derivative and sulphite or polyoxyalkylene derivative is 0.5 to 1.5 mole per mole amino-s-triazine.

16. Process as claimed in one of the claims 10 to 14,
**wherein**
if R² = phenyl, the phenyl residue is additionally substituted with C₁ to C₂₀ alkyl residues, hydroxyl or sulphonic acid groups.

17. Process as claimed in one of the claims 10 to 15,
**wherein**
an aldehyde carboxylic acid or aldehyde sulphonic acid selected from the group glyoxylic acid, benzaldehydecarboxylic acid, benzaldehydesulphonic acid and benzaldehydedisulphonic acid is used as the aldehyde acid derivative.

18. Process as claimed in one of the claims 10 to 17,
**wherein**
alkaline salts such as sodium or potassium salts, alkaline earth salts such as calcium salts, or ammonium salts or salts of organic amines are used as monovalent or divalent salts of the aldehyde acid derivatives.

19. Process as claimed in one of the claims 10 to 18,
**wherein**
the total concentration of the reaction components in the aqueous solution is adjusted such that the polycondensation product is obtained with a solids content of 20 to 50 % by weight.

20. Process as claimed in one of the claims 10 to 19,
**wherein**
the condensation in step b) is carried out at a pH of 4.5 to 6.0.

21. Process as claimed in one of the claims 10 to 20,
**wherein**
compounds which introduce additional sulphonic acid groups are used in step b) in an amount of up to 0.7 mole per mole amino-s-triazine to adjust the pH.

22. Process as claimed in claim 21,
**wherein**
sulfanilic acid and/or amidosulphonic acid is used as the compound that introduces additional sulphonic acid groups.

23. Process as claimed in one of the claims 10 to 22,
**wherein**
the temperature in step b) is adjusted to 50 to 70°C.

24. Use of the polycondensation products as claimed in claims 1 to 23 as an additive for aqueous suspensions based on inorganic binding agents, in particular cement, lime and gypsum.

25. Use of the polycondensation products as claimed in claim 24,
**wherein**
they are used in an amount of 0.01 to 10 % by weight relative to the weight of the inorganic binding agent.

26. Use as claimed in claim 25,
**wherein**
the polycondensation products are used in an amount of 0.1 to 5 % by weight relative to the weight of the inorganic binding agent.

## Revendications

1. Produit de condensation soluble dans l'eau, à base d'amino-s-triazine, de formaldéhyde et d'un sulfite dans le rapport molaire 1 : 0,5 à 5,0 : 0,1 à 1,5, caractérisé en ce que, pour une mol d'amino-s-triazine, il contient, sous forme incorporée par condensation, 0,01 à 1,0 mol d'un dérivé de polyoxyalkylène de formule générale (I) 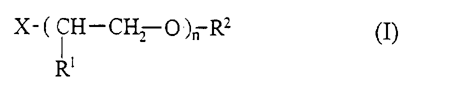 dans laquelle
X = -NH₂, -NH-CO-NH₂, -O-CO-NH₂ ou -O-CO-NH-R³-NH-CO-Z;
R¹ = H ou un reste hydrocarboné aliphatique de 1 à 4 atomes de carbone;
R² = H ou un reste hydrocarboné aliphatique de 1 à 20 atomes de carbone, un reste cycloaliphatique de 5 à 8 atomes de carbone ou un reste hydrocarboné aromatique de 6 à 10 atomes de carbone éventuellement substitué ou le reste 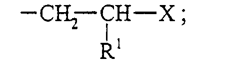
R³ = un reste hydrocarboné aliphatique de 2 à 18 atomes de carbone, un reste hydrocarboné cycloaliphatique de 4 à 15 atomes de carbone, un reste hydrocarboné aromatique de 6 à 15 atomes de carbone ou un reste hydrocarboné araliphatique de 8 à 15 atomes de carbone;
Z = -NH₂, -NH-CO-NH₂ et
n= un nombre de 1 à 100,
et/ou
0,01 à 1,5 mol d'un dérivé d'acide-aldéhyde de formule générale (II)
H-CO-R⁴ (II)
dans laquelle R⁴ = COOH ou un reste phényle avec -COOH, -SO₃H ou -PO₃H₂, ou un de leurs sels mono- ou divalents,
une solution aqueuse ayant une teneur en matière solide de 20 % en masse du produit de condensation présentant à 20°C une viscosité de 2 à 10 × 10⁻⁶ m²/s (2 à 10 cSt).

2. Produit de condensation selon la revendication 1, caractérisé en ce qu'il contient le composé de formule générale (I) dans laquelle
X = -NH₂ ou -O-CO-NH-R³-NH-CO-Z;
R¹ = H ou CH₃;
R³ = un reste toluylène ou xylylène,
Z = NH₂ et
n= 7 à 15.

3. Produit de condensation selon la revendication 1, caractérisé en ce qu'il contient comme composé de formule générale (II) au moins un composé du groupe constitué par l'acide glyoxylique, un acide benzaldéhydesulfonique et un acide formylbenzoïque.

4. Produit de condensation selon l'une des revendications précédentes, caractérisé en ce que l'amino-s-triazine est constituée entièrement ou en majeure partie de mélamine.

5. Produit de condensation selon l'une des revendications précédentes, caractérisé en ce que l'amino-s-triazine est remplacée jusqu'à 50 % en mol par un ou plusieurs autres composés formant des aminoplastes, appartenant au groupe de l'urée, de la thiourée, du dicyandiamide ou de la guanidine ou de ses sels.

6. Produit de condensation selon l'une des revendications précédentes, caractérisé en ce que le rapport molaire de l'amino-s-triazine au formaldéhyde est de 1 : 1,5 à 3,5.

7. Produit de condensation selon la revendication 1 ou 2, caractérisé en ce que la somme du sulfite et du dérivé de polyoxyalkylène est de 0,5 à 1,5 mol par mol d'amino-s-triazine.

8. Produit de condensation selon la revendication 1 ou 3, caractérisé en ce que la somme du dérivé d'acide-aldéhyde et du sulfite et éventuellement du dérivé de polyoxyalkylène est de 0,5 à 1,5 mol par mol d'amino-s-triazine.

9. Produit de polycondensation selon la revendication 1, caractérisé en ce que, dans le cas où R² = phényle, le reste phényle contient en outre au moins un substituant du groupe constitué par les restes alkyle en C₁-C₂₀, les groupes hydroxyle et les groupes acide sulfonique.

10. Procédé de préparation de produits de polycondensation solubles dans l'eau à base d'amino-s-triazines par condensation en deux étapes, caractérisé en ce que
a₁) on condense une amino-s-triazine, du formaldéhyde et un sulfite en un rapport molaire de 1 : 0,5 à 5,0 : 0,1 à 1,5 en solution aqueuse, à un pH de 9,0 à 12,0 et à une température de 40 à 90°C, jusqu'à ce que le sulfite ne soit plus décelable, et, vers la fin de la condensation préalable, on ajoute, par mol d'amino-s-triazine utilisée, 0,01 à 1,0 mol d'un dérivé de polyoxyalkylène de formule générale (I) 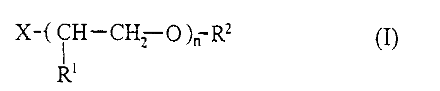 dans laquelle
X = -NH₂, -NH-CO-NH₂, -O-CO-NH₂ ou -O-CO-NH-R³-NH-CO-Z;
R¹ = H ou un reste hydrocarboné aliphatique de 1 à 4 atomes de carbone;
R² = H ou un reste hydrocarboné aliphatique de 1 à 20 atomes de carbone, un reste cycloaliphatique de 5 à 8 atomes de carbone ou un reste hydrocarboné aromatique de 6 à 10 atomes de carbone éventuellement substitué ou le reste 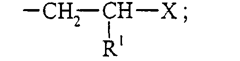
R³ = un reste hydrocarboné aliphatique de 2 à 18 atomes de carbone, un reste hydrocarboné cycloaliphatique de 4 à 15 atomes de carbone, un reste hydrocarboné aromatique de 6 à 15 atomes de carbone ou un reste hydrocarboné araliphatique de 8 à 15 atomes de carbone;
Z = -NH₂, -NH-CO-NH₂ et
n = un nombre de 1 à 100,
et/ou
a₂) on fait réagir un dérivé d'acide-aldéhyde de formule générale (II)
H - CO - R⁴ (II)
dans laquelle R⁴ = COOH ou un reste phényle avec -COOH, -SO₃H ou -PO₃H₂, ou un de leurs sels mono- ou divalents,
d'abord avec l'amino-s-triazine en une quantité de 0,01 à 1,5 mol par mol d'amino-s-triazine, à un pH de 4,5 à 6,5 et à une température de 20 à 90°C, puis avec du formaldéhyde en une quantité de 0,5 à 5,0 mol par mol d'amino-s-triazine, éventuellement en ajoutant un sulfite et/ou un dérivé de polyoxyalkylène, à un pH de 9,0 à 12,0 et à une température de 40 à 90°C, et
b) après l'étape a₁) ou a₂), on continue la condensation à un pH de 3,0 à 7,0 et à une température de 40 à 90°C jusqu'à ce que la viscosité de la solution ayant une teneur en matière solide de 20 % en masse, à 20°C, ait une valeur de 2 à 10 cSt.

11. Procédé selon la revendication 10, caractérisé en ce que l'on utilise de la mélamine comme amino-s-triazine.

12. Procédé selon la revendication 10 ou 11, caractérisé en ce que l'amino-s-triazine est remplacée jusqu'à 50 % en mol par un ou plusieurs autres composés formant des aminoplastes, choisis dans le groupe constitué par l'urée, la thiourée, le dicyandiamide ou la guanidine ou ses sels.

13. Procédé selon l'une des revendications 10 à 12, caractérisé en ce que le rapport molaire de l'amino-s-triazine au formaldéhyde dans les étapes a₁) et a₂) est établi à 1 : 1,5 à 3,5.

14. Procédé selon l'une des revendications 10 à 13, caractérisé en ce que l'on établit le rapport molaire de l'amino-s-triazine au dérivé de polyoxyalkylène dans l'étape a₁) de manière que la somme du sulfite et du dérivé de polyoxyalkylène représente 0,5 à 1,5 mol par mol d'amino-s-triazine.

15. Procédé selon l'une des revendications 10 à 14, caractérisé en ce que l'on établit le rapport molaire de l'amino-s-triazine au sulfite et/ou au dérivé de polyoxyalkylène dans l'étape a₂) de manière que la somme du dérivé d'acide-aldéhyde et du sulfite et/ou du dérivé de polyoxyalkylène représente 0,5 à 1,5 mol par mol d'amino-s-triazine.

16. Procédé selon l'une des revendications 10 à 15, caractérisé en ce que, dans le cas où R² = phényle, le reste phényle est substitué en outre par des restes alkyle en C₁-C₂₀, des groupes hydroxyle ou des groupes acide sulfonique.

17. Procédé selon l'une des revendications 10 à 15, caractérisé en ce que l'on utilise comme dérivé d'acide-aldéhyde un acide aldéhyde-carboxylique ou un acide aldéhyde-sulfonique choisi dans le groupe constitué par l'acide glyoxylique, un acide benzaldéhydecarboxylique, un acide benzaldéhydesulfonique et un acide benzaldéhydedisulfonique.

18. Procédé selon l'une des revendications 10 à 17, caractérisé en ce que l'on utilise comme sels mono- ou divalents des dérivés d'acide-aldéhyde des sels de métaux alcalins comme, par exemple, des sels de sodium ou de potassium, des sels de métaux alcalino-terreux comme, par exemple, des sels de calcium, ainsi que des sels d'ammonium ou des sels d'amines organiques.

19. Procédé selon l'une des revendications 10 à 18, caractérisé en ce que l'on établit la concentration totale des constituants réactionnels dans la solution aqueuse de manière que le produit de polycondensation se forme avec une teneur en matière solide de 20 à 50 % en masse.

20. Procédé selon l'une des revendications 10 à 19, caractérisé en ce que la condensation dans l'étape b) s'effectue à un pH de 4,5 à 6,0.

21. Procédé selon l'une des revendications 10 à 20, caractérisé en ce que, pour régler le pH dans l'étape b), on utilise des composés introduisant des groupes acide sulfonique supplémentaires en une quantité allant jusqu'à 0,7 mol par mol d'amino-s-triazine.

22. Procédé selon la revendication 21, caractérisé en ce que l'on utilise comme composé introduisant des groupes acide sulfonique supplémentaires de l'acide sulfanilique et/ou de l'acide amidosulfonique.

23. Procédé selon l'une des revendications 10 à 22, caractérisé en ce que l'on amène la température dans l'étape b) à une valeur de 50 à 70°C.

24. Utilisation des produits de polycondensation selon les revendications 1 à 23 comme additifs pour des suspensions aqueuses à base de liants inorganiques, en particulier de ciment, de chaux ou de plâtre.

25. Utilisation des produits de polycondensation selon la revendication 24, caractérisée en ce qu'on les utilise en une quantité de 0,01 à 10 % en masse par rapport à la masse du liant inorganique.

26. Utilisation selon la revendication 25, caractérisée en ce que l'on utilise les produits de polycondensation en une quantité de 0,1 à 5 % en masse par rapport à la masse du liant inorganique.
